# EUROPEAN PATENT SPECIFICATION

(11) **EP 0 425 276 B1**
(45) Date of publication and mention of the grant of the patent: **28.02.1996**
(21) Application number: 90311668.9
(22) Date of filing: 24.10.1990
(51) Int. Cl.: B60K 28/16, B60K 31/10, B60K 41/06

(54) **Running state control system for a motor vehicle**
Laufzustand-Steuerungssystem für ein Kraftfahrzeug
Système de commande d'état de marche pour véhicule à moteur

(30) Priority: 24.10.1989 JP 274793/89
(43) Date of publication of application: 02.05.1991
(73) Proprietor: NISSAN MOTOR CO., LTD., Yokohama City (JP)
(72) Inventor: Yamamoto, Isao, Sagamihara City (JP)
(74) Representative: Milhench, Howard Leslie

(56) References cited:
- EP-A- 0 186 122
- DE-A- 3 836 471
- PATENT ABSTRACTS OF JAPAN vol. 13, no. 204 (M-825)15 May 1989 & JP-A-01 028 035 ( MAZDA MOTOR CORPORATION ) 30 January 1989 & US-A-4 987 966

## Description

### FIELD OF THE INVENTION

The present invention relates to a system for controlling the running state of a motor vehicle.

### BACKGROUND OF THE INVENTION

Some modern motor vehicles are equipped with a speed control or cruise control apparatus which automatically adjusts the vehicle speed to a speed setting established by the driver. One such speed control apparatus is disclosed, for example, in JP-A-59-58134. When driving a motor vehicle having a speed control apparatus of this type, the driver accelerates the vehicle up to the speed at which he desires it to run in a constant manner, and then he presses a vehicle speed setting button to set the desired speed. The vehicle speed is then automatically adjusted to the desired speed setting by regulation of the degree of opening of a throttle valve or carburettor.

This speed control facility is useful for the driver when he is driving on a superhighway at constant speed, because it avoids the driver having to maintain continuous depression of the accelerator pedal. The speed control function is arranged to be cancelled when the driver depresses the clutch pedal or the brake pedal of the vehicle. The vehicle can be accelerated to a speed above the set control speed when the accelerator pedal is depressed, and is then controlled to run again at the set speed in a constant manner when the accelerator pedal is released.

Furthermore, some modern motor vehicles are equipped with a traction control apparatus to prevent skidding of the driving wheels. One such driving force control apparatus is disclosed, for example, in JP-A-62-91326. In a motor vehicle having a traction control apparatus of this type, when the vehicle undergoes sudden acceleration during starting on a road with an extremely low friction coefficient, such as a frozen road, or when the vehicle skids during slow acceleration in a high speed run, an advanced reduction in the driving force of the vehicle is possible in accordance with the magnitude of the skid ratio and/or some variation thereof. Thus, high running stability can be assured in any running pattern.

To decrease the driving force of the vehicle, a second throttle valve is automatically adjusted towards a closed position. This second throttle valve is provided in series with the mechanically operated throttle valve which is controlled by the accelerator pedal of the vehicle, and is normally completely opened and arranged to be closed by a closing operation signal from the traction control apparatus. The driving force of the vehicle is determined by that one of the mechanical throttle valve and the second throttle valve which is more fully closed.

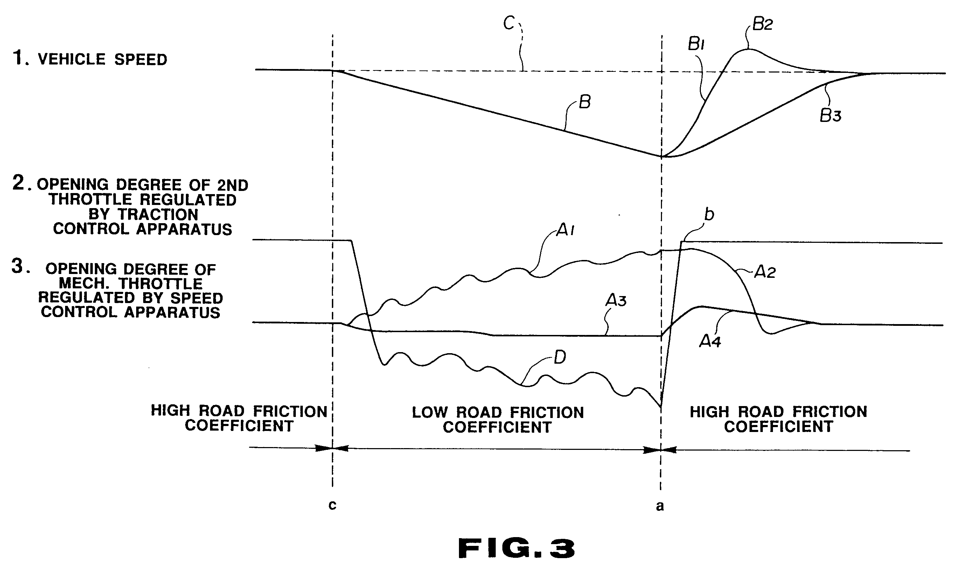

If a running state control system for a motor vehicle is constituted as a combination of known speed control and traction control apparatuses, there arise the following problems:
(1) Referring to Fig. 3 of the accompanying drawings which shows various vehicle operating characteristics for different road conditions, when the traction control apparatus closes the second throttle valve on a road with a low friction coefficient, the vehicle speed is decreased as indicated by the portion B of vehicle speed characteristic curve 1. If the speed control apparatus is in operation at this time, the mechanical throttle valve will be opened by command of the speed control apparatus as indicated by the portion A₁ of the characteristic curve 3. Under such conditions, when the vehicle comes to a road section with a high friction coefficient (namely the point a in Fig. 3), the traction control apparatus opens the second throttle valve substantially instantaneously (point b in Fig. 3), whereas the speed control apparatus, which has a relatively slow response, only gradually closes the mechanical throttle valve as indicated by the portion A₂ of the characteristic curve 3. This results in the temporary generation of a vehicle driving force greater than that required to keep the vehicle speed C at the desired speed set in the speed control apparatus so that the vehicle undergoes a quick acceleration as indicated by the portion B₁ of the characteristic curve 1, resulting in the vehicle speed exceeding the set speed C as indicated by the portion B₂ of the characteristic curve 1. This effect arises because an operation signal such as to open the mechanical throttle valve is outputted by the speed control apparatus during the period that the driving force control is being effected to increase the engine power output.
(2) When a speed control apparatus is provided on a motor vehicle having automatic transmission, one of the functions of the apparatus is to maintain the vehicle speed by increasing the driving force of the vehicle by automatically down-shifting the gear position when the vehicle comes to an incline in the road and the vehicle speed reduces below the desired setting by at least a predetermined amount. When the traction control apparatus is in operation on a road with a low friction coefficient, however, it may not be effective to seek to increase the vehicle driving force by down-shifting the gear position.
(3) If the operation of the speed control apparatus is to be discontinued, then the mechanical throttle valve which is opened should be closed with the least possible delay. However, if this closing operation of the mechanical throttle valve takes place on a road with a low friction coefficient where the traction control apparatus begins to function, the running stability of the vehicle may be decreased due to the quick reduction in the driving force of the vehicle that results from rapidly closing the throttle valve.

Disclosed in DE-A-3836741 and in corresponding US-A-4951208 is a combined speed control and traction control system for a motor vehicle in which the operation of the speed control system is inhibited automatically whenever the traction control system detects the occurrence of slip due to low road surface adhesion. In the system of DE-A-3836741 a measure is made of vehicle slip, the slip measure is compared with a predetermined value, and if the predetermined value is exceeded an inhibit signal is relayed to the speed control system and results in the speed control system being rendered completely inoperative. While such a system overcomes or at least reduces some of the abovementioned disadvantages, it does not provide a full solution to all of the problems, nor does it enable a full solution to be achieved.

### OBJECTS AND SUMMARY OF THE INVENTION

It is, therefore, an object of the present invention to provide a system for controlling the running state of a motor vehicle which combines speed control and traction control and avoids or at least substantially reduces the aforementioned disadvantages.

It is another object of the present invention to provide a system for controlling the running state of a motor vehicle which enables speed control to be performed with high running stability when traction control is in operation.

According to the present invention there is provided a system for controlling the running state of a motor vehicle, said system comprising traction control means for controlling the vehicle driving force, speed control means for regulating the vehicle speed in accordance with a predetermined speed setting, and means responsive to a predetermined output from said traction control means for inhibiting the operation of the speed control means, as known from DE-A-3836741 abovementioned, the system according to the invention being characterized in that when the traction control means and the speed control means are both in operation, the speed control means is allowed to output a signal such as would tend to decrease the vehicle driving force and is inhibited only from outputting a signal such as would tend to increase the vehicle driving force.

According to a particular exemplary embodiment of the present invention as above defined the speed control means is connected with the traction control means and includes speed control correcting means comprising means for determining whether said traction control means is in operation and for generating a traction control indicative signal while said traction control means is in operation, and means for inhibiting said speed control means from outputting a signal to increase the vehicle driving force while said traction control indicative signal is present.

In such an embodiment of the present invention the motor vehicle might include a first throttle valve operable by the driver of the vehicle and by the speed control means and a second throttle valve disposed in series with said first throttle valve and operable by said traction control means, the arrangement being such that the speed control means is inhibited from outputting a signal to open the first throttle valve while the traction control indicative signal is present. The traction control means might include an electric stepper motor for driving the second throttle valve, and a servo actuator controlled by the speed control means might be operatively connected with the first throttle valve, and the arrangement might be such that the servo actuator is inhibited from effecting an opening operation of said second throttle valve in response to the generation of a vehicle torque suppressing signal by said traction control means.

In the prior art system of DE-A-3836741 the speed control system is completely inhibited when the traction control system detects excessive slip. According to the system of the present invention, the speed control system is inhibited only from outputting a signal such as to effect an increase in the vehicle driving force when both systems are in operation; the speed control system is still capable of outputting a signal to decrease the vehicle driving force. This has the advantageous effect that when traction control and speed control are being effected due to the vehicle running onto a road section having a low friction coefficient, the speed control does not open the first throttle valve; as a result, when the vehicle again runs onto a section of road having a high friction coefficient and the traction control is interrupted, the traction torque will not be excessive even if the second throttle valve is opened instantaneously, thereby avoiding the problem that the speed control is disturbed by a sudden acceleration of the vehicle.

The above and further features of the present invention are set forth in the appended claims and, together with the advantages thereof, will become clear from consideration of the following detailed description of an exemplary embodiment given with reference to the accompanying drawings.

### BRIEF DESCRIPTION OF THE DRAWINGS

Fig. 1 is a block diagram illustrating a system for controlling the running state of a motor vehicle according to an embodiment of the present invention.
Fig. 2 is a flowchart showing the operation of the embodiment of Fig. 1; and
Fig. 3 is a graphical representation of characteristic curves showing the behaviour of a motor vehicle under different road friction coefficients.

### DETAILED DESCRIPTION OF THE EMBODIMENT

Referring to the accompanying drawings, a preferred embodiment of a motor vehicle running state control system according to the present invention will be described.

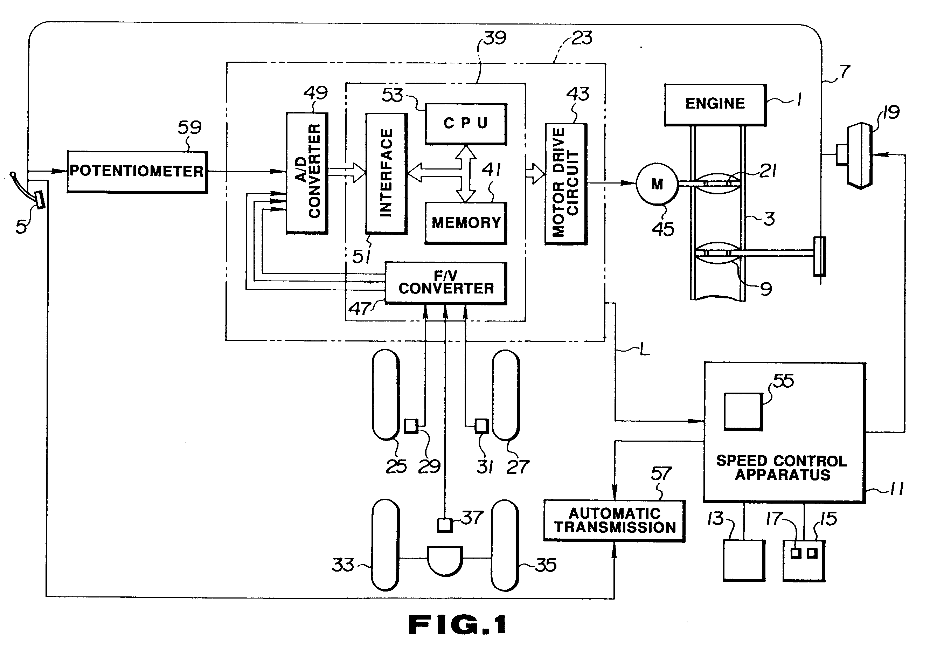

Referring to Fig. 1, a mechanical throttle valve 9 is arranged in a throttle chamber 3 which is connected to an engine 1 of a motor vehicle. The mechanical throttle valve 9 is arranged to be operated by an accelerator pedal 5 through an accelerator cable 7, and is also arranged to be operated by command of a speed control apparatus 11 which is adapted to adjust the vehicle speed to a predetermined speed setting.

The speed control apparatus 11 includes a microcomputer, and speed control correcting means 55 which will be described hereinafter. This speed control apparatus 11 receives a signal indicative of the vehicle speed as detected by a vehicle speed sensor 13. If a vehicle speed setting button 17 of a control switch 15 is pressed when the vehicle is moving at a desired speed, this vehicle speed is set or stored as a setting in the speed control apparatus 11. In order to adjust the vehicle speed to conform to this speed setting, an actuator 19 controls the opening and closing of the mechanical throttle valve 9 by command of the speed control apparatus 11. The speed control function established in the manner described may be cancelled by depressing the brake or clutch pedal of the vehicle.

Within the throttle chamber 3, there is provided a second throttle valve 21 in series with the mechanical throttle valve 9. The second throttle valve 21 is operated by command of a traction control apparatus 23 which performs traction or driving force control so as to minimize skidding of the driving wheels, namely the right and left rear wheels 35 and 33 in the example shown in Fig. 1.

The traction control apparatus 23 includes a microcomputer 39 having a central processing unit (CPU) 53, a memory 41, an interface circuit 51, a frequency-to-voltage (F/V) converter 47, an analogue-to-digital (A/D) converter 49, and a motor drive circuit 43. The rotational speeds of two coupled driving wheels (the right and left front wheels 27 and 25 in Fig. 1) are detected by two rotational speed sensors 31 and 29, respectively, and the average rotational speed of the two driving wheels 35 and 33 is detected by a rotational speed sensor 37. The rotational speeds detected by the rotational speed sensors 31, 29, and 37 are converted into respective voltage values by the F/V converter 47, and these voltage values are in turn converted into respective digital values by the A/D converter 49. Via the interface circuit 51, the digital values are provided to the CPU 53 in which actual skid state indicative values, such as a skid ratio variation, are calculated. The CPU 53 provides commands to the motor drive circuit 43 for adjusting the actual skid state of the vehicle, as determined by the derived skid state indicative values, towards corresponding skid state settings stored in the memory 41, signals from the motor drive circuit 43 being applied to the stepper motor 45 to control opening and closing operations of the second throttle valve 43 and thus minimize the skidding of the driving wheels 35 and 33.

The CPU 53 compares the derived actual skid state indicative values with corresponding skid state setting values stored in the memory 41. If the actual skid state indicative values exceed the corresponding skid state setting values by predetermined amounts, the CPU 53 will provide a command to close the second throttle valve 21 which until then is fully open. On the other hand, if the skid state of the driving wheels 35 and 33 is reduced by a decrease in the drive thereto, i.e. the actual skid state indicative values are less than the corresponding skid state setting values by predetermined amounts, the CPU 53 will provide a command to open the second throttle valve 21.

In order to transmit to the speed control apparatus 11 a signal indicative that the traction control apparatus is operating and is outputting a control signal, the speed control apparatus 11 is connected to the traction control apparatus 23 via a signal line L. When the speed control apparatus 11 receives a signal from the traction control apparatus 23 via the signal line L, the speed control correcting means 55 inhibits the speed control apparatus 11 from outputting (a) an operation signal such as to cause the mechanical throttle valve 9 to open, and (b) a signal to an automatic transmission 57 of the vehicle such as to cause the transmission to shift down. Additionally, the speed control correcting means 55 retards the return speed of the mechanical throttle valve 9 so as to prevent it from moving suddenly in the closing direction thereof.

The extent of depression of the accelerator pedal 5 is detected by a potentiometer 59 and a corresponding signal is provided to the A/D converter 49.

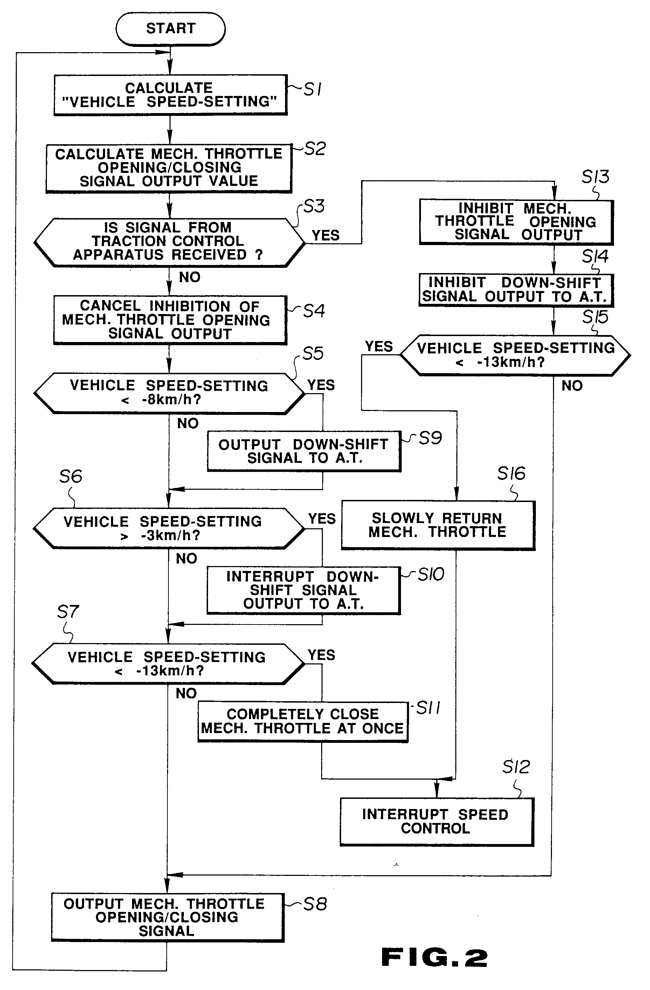

Referring now to Fig. 2, the operation of the embodiment will hereinafter be described. At step S1, a difference "vehicle speed - setting" is calculated. The vehicle speed is detected by the vehicle speed sensor 13, and the setting namely the desired vehicle speed, is set by pushing the vehicle speed setting button 17 so as to store the actual vehicle speed at that time in the speed control apparatus 11.

At step S2, the output value of the signal that is required to be applied to the mechanical throttle valve 9 for opening or closing the same is calculated so as to perform the speed control in accordance with the difference "vehicle speed - setting". Specifically, in accordance with this difference, the speed control apparatus 11 provides to the actuator 19 an opening operation signal or a closing operation signal and, based on the signal, the valve 9 is opened or closed by the actuator 19 thus adjusting the vehicle speed towards the desired speed setting.

At a subsequent step S3, it is checked whether or not the speed control apparatus 11 is receiving the signal from the traction control apparatus 23 via the signal line L. When the actual skid state indicative values which are detected by the rotational speed sensors 31, 29, and 37 and then calculated by the CPU 53 are less than the respective corresponding skid state setting values by predetermined amounts, then the speed control apparatus 11 does not receive any signal from the traction control apparatus 23.

At a subsequent step S4, the second throttle valve 21 is kept completely opened, and any inhibition of the output of the opening operation signal to the mechanical throttle valve 9 is cancelled. Thus, on a road with a high friction coefficient, the vehicle will undergo normal speed control.

At a subsequent step S5 it is checked whether (vehicle speed - setting) < - 8 km/h or not. At a step S6 it is checked whether (vehicle speed-setting)

3 km/h or not, and at a step S7 it is checked whether (vehicle speed - setting) < - 13 km/h or not. If all the answers to the inquiries at steps S5, S6, and S7 are NO, the control proceeds to a subsequent step S8.

At the step S8, the speed control apparatus 11 provides to the actuator 19 an opening operation signal or a closing operation signal for correspondingly adjusting the mechanical throttle valve 9. That is, in step S8, even if the vehicle speed becomes less than the setting, the speed control is continued if the difference between the two is less than 13 km/h as determined in step S7.

On the other hand, at the step S5, if the vehicle speed is less than the setting and the difference between the two is more than 8 km/h, which occurs when the vehicle comes to a rise in the road, the control proceeds to a step S9 where a down-shift signal is provided to the automatic transmission 57, thereby increasing the traction of the vehicle which results in recovery of the vehicle speed. Then, the control proceeds from the step S9 to the step S6.

At the step S6, if the vehicle speed is less than the setting and the difference between the two is less than 3 km/h, the control proceeds to a step S10 where the output of the down-shift signal to the automatic transmission 57 is interrupted, thus returning to the previous gear position. Then, the control proceeds from the step S10 to the step S7.

At the step S7, if the vehicle speed is less than the setting and the difference between the two is more than 13 km/h, which occurs when the vehicle is braked, the control proceeds to a step S11 where the mechanical throttle valve 9 is completely closed at once. Subsequently, at a step S12, the operation of the speed control apparatus 11 is interrupted.

Referring again to Fig. 3, the behaviour of a vehicle which undergoes control as described above is schematically indicated by a portion of each of the characteristic curves 1 - 3 on the left side of a point c. When the vehicle arrives at a road section with a low friction coefficient, the vehicle is subject to increasing skid of the driving wheels 35 and 33. If the actual skid state indicative values that are calculated in the traction control apparatus exceed the corresponding stored skid state setting values by predetermined amounts, the traction control apparatus 23 provides a signal to the stepper motor 45 via the motor drive circuit 43 so as to close the second throttle valve 21, thus achieving a decrease in the traction or driving force of the vehicle. Thereafter, as indicated by a portion D of the characteristic curve 2 in Fig. 3, the traction control apparatus 23 will control opening and closing operations of the second throttle valve 21 so as to obtain actual skid state indicative values less than the corresponding stored skid state setting values by predetermined amounts.

At the same time, the speed control apparatus 11 receives a signal from the driving force control apparatus 23 via the signal line L, i.e. the answer to the inquiry at the step S3 is YES. Thus, the control proceeds from the step S3 to a step S13. At step S13, the speed control correcting means 55 provides a command to the speed control apparatus 11 so as to inhibit it from outputting an opening operation signal to the mechanical throttle valve 9. Subsequently, at a step S14, the speed control correcting means 55 provides a command to the speed control apparatus 11 so as to inhibit it from outputting a down-shift signal to the automatic transmission 57.

Thus, even if the traction control apparatus 23 opens the second throttle valve 21 at a time when the vehicle comes again to a road surface with a high friction coefficient, the traction of the vehicle will not exceed the level necessary to keep the vehicle at the speed set in the speed control apparatus 11 since the degree of opening of the mechanical throttle valve 9 is relatively small so that the vehicle speed cannot exceed the desired speed setting. Further, since the outputting of a down-shift signal to the automatic transmission 57 is inhibited, an increase in traction due to down-shifting of the automatic transmission 57 is prevented on a road surface with a low friction coefficient.

At a subsequent step S15, it is checked whether (vehicle speed - setting) < - 13 km/h or not. If the vehicle speed becomes less than the setting and the difference between the two is more than 13 km/h, the control proceeds from step S15 to a step S16 where the speed control correcting means 55 provides a command to the speed control apparatus 11 so as to slowly return the opened mechanical throttle valve 9 in the closing direction thereof. This is indicated by portion A₃ of the characteristic curve 3 in Fig. 3. Subsequently, at the step S12, the operation of the speed control apparatus 11 is interrupted, thus obtaining decreased skidding of the driving wheels 35 and 33.

If the operation of the speed control apparatus 11 is interrupted when the vehicle comes to a road surface with a low friction coefficient, the mechanical throttle valve 9 is slowly returned by the command of the speed control correcting means 55, thus preventing a sudden decrease in traction of the vehicle and resulting in high running stability thereof.

As indicated by the characteristic curves on the right side of the point a in Fig. 3, if the vehicle experiences decreasing skidding of the driving wheels 35 and 33 when going through the road section with a low friction coefficient and coming again to the road section with a high friction coefficient, the traction control is interrupted so as to open the second throttle valve 21 completely, and the mechanical throttle valve 9 is opened in accordance with the vehicle speed as indicated by the portion A₄ of the characteristic curve 3, resulting in recovery of the vehicle speed as indicated by the portion B₃ of the characteristic curve 1.

As will be appreciated by those possessed of appropriate skills, the vehicle running state control system of the present invention as described in the foregoing is simply constructed and comprises a speed control apparatus 11 and a traction control apparatus 23 of a well known type combined with the addition of the signal line L and the control program represented in Fig. 2. It is to be understood that the operations of the traction control and speed control systems shown in the described embodiment are illustrative of the invention and are not restrictive, and that the present invention may be practiced with other types of operations thereof. Furthermore, it is to be appreciated that while the invention has been described herein with reference to a carburetted engine, it is equally applicable to fuel injection type engines.

## Claims

1. A system for controlling the running state of a motor vehicle, said system comprising traction control means (23) for controlling the vehicle driving force, speed control means (11) for regulating the vehicle speed in accordance with a predetermined speed setting, and means (55) responsive to a predetermined output from said traction control means (23) for inhibiting the operation of the speed control means (11), characterized in that when the traction control means (23) and the speed control means (11) are both in operation, the speed control means is allowed to output a signal such as would tend to decrease the vehicle driving force and is inhibited only from outputting a signal such as would tend to increase the vehicle driving force.

2. A system as claimed in claim 1 comprising:
a first throttle valve (9); and
a second throttle valve (21) arranged in series with said first throttle valve; and wherein
said traction control means (23) is arranged to control the vehicle driving force by controlling the operation of said second throttle valve (21);
said speed control means (11) is arranged to regulate the vehicle speed to correspond to a predetermined speed setting by controlling the operation of said first throttle valve (9); and
said speed control means (11) includes speed control correcting means (55) constituting said inhibiting means and comprising means for determining whether said traction control means (23) is in operation and generating a traction control indicative signal while said traction control means (23) is in operation, and means for inhibiting said speed control means (11) from outputting an operation signal such as to open said first throttle valve (9) while said traction control indicative signal is present.

3. A system as claimed in claim 2 for a motor vehicle having an automatic transmission and wherein said speed control correcting means (55) is adapted to inhibit said speed control means (11) from outputting a down-shift signal to the automatic transmission of the vehicle while said traction control indicative signal is present.

4. A system as claimed in claim 2 or 3, wherein said speed control correcting means (55) is adapted to command said speed control means (11) to output a signal such as to return said first throttle valve (9) slowly towards a closed position when operation of said speed control apparatus (11) is inhibited, said traction control apparatus (23) is in operation and said vehicle speed deviates from said predetermined setting by an amount greater than a predetermined threshold value.

5. A system as claimed in claim 4, wherein said speed control correcting means (55) is adapted to command said speed control apparatus (11) to output a signal such as to return said first throttle valve (9) at once towards a closed position when said vehicle speed deviates from said predetermined setting by an amount greater than a predetermined threshold value indicative of a braking operation.

6. A system as claimed in claims 4 and 5, wherein said predetermined threshold values are substantially identical.

7. A system as claimed in any of claims 2 to 6, wherein said first throttle valve (9) comprises a mechanical valve.

## Patentansprüche

1. Ein System zum Steuern des Laufzustands eines Motorfahrzeugs, wobei das genannte System eine Mitnahmereibungs-Steuerungsvorrichtung (23) zum Steuern der Fahrzeugantriebskraft, eine Geschwindigkeits-Steuerungsvorrichtung (11) zum Regeln der Fahrzeuggeschwindigkeit nach Maßgabe einer vorbestimmten Geschwindigkeitseinstellung, und eine Einrichtung (55) umfaßt, die auf einen vorbestimmten Ausgang von der genannten Mitnahmereibungs-Steuerungseinrichtung (23) anspricht, um die Arbeitsweise der Fahrzeuggeschwindigkeits-Steuerungseinrichtung (11) zu sperren**, dadurch gekennzeichnet**, daß, wenn die Mitnahmereibungs-Steuerungsvorrichtung (23) und die Geschwindigkeits-Steuerungsvorrichtung (11) beide in Betrieb sind, der Geschwindigkeits-Steuerungsvorrichtung gestattet ist, ein solches Signal auszugeben, das dazu neigen würde, die Fahrzeugantriebskraft zu verringern, und nur am Ausgeben eines solchen Signals gehindert wird, das dazu neigen würde, die Fahrzeugantriebskraft zu erhöhen.

2. Ein System, wie in Anspruch 1 beansprucht, umfassend:
ein erstes Drosselventil (9); und
ein zweites Drosselventil (21), das in Reihe mit dem genannten ersten Drosselventil angeordnet ist; und
wobei
die genannte Mitnahmereibungs-Steuerungsvorrichtung (23) ausgebildet ist, die Fahrzeugantriebskraft zu steuern, indem die Arbeitsweise des genannten zweiten Drosselventils (21) gesteuert wird;
die genannte Geschwindigkeits-Steuerungsvorrichtung (11) ausgebildet ist, die Fahrzeuggeschwindigkeit zu regeln, damit sie einer vorbestimmten Geschwindigkeitseinstellung entspricht, indem die Arbeitsweise des genannten ersten Drosselventils (9) gesteuert wird; und
die genannte Geschwindigkeits-Steuerungsvorrichtung (11) eine Korrektureinrichtung (55) für die Geschwindigkeitssteuerung einschließt, die die Verhinderungseinrichtung bildet und eine Einrichtung zum Bestimmen umfaßt, ob die genannte Mitnahmereibungs-Steuerungsvorrichtung (23) in Betrieb ist, und zum Erzeugen eines eine Mitnahmereibungssteuerung anzeigenden Signals, während die genannte Mitnahmereibungs-Steuerungsvorrichtung (23) in Betrieb ist, und eine Einrichtung zum Sperren der genannten Geschwindigkeits-Steuerungsvorrichtung (11) an der Ausgabe eines solchen Betätigungssignals, das das genannte erste Drosselventil (9) öffnet, während das genannte eine Zugkraftsteuerung anzeigende Signal vorhanden ist.

3. Ein System, wie in Anspruch 2 beansprucht, für ein Motorfahrzeug, das ein automatisches Getriebe aufweist, und wobei die genannte Korrektureinrichtung (55) zur Geschwindigkeitssteuerung die genannte Geschwindigkeits-Steuerungsvorrichtung (11) an der Ausgabe eines Signals zum Herabschalten an das automatische Getriebe des Fahrzeugs hindern kann, während das genannte eine Zugkraftsteuerung anzeigende Signal vorhanden ist.

4. Ein System, wie in Anspruch 2 oder 3 beansprucht, in dem die genannte Korrektureinrichthung (55) zur Geschwindigkeitssteuerung der genannten Geschwindigkeits-Steuerungsvorrichtung (11) befehlen kann, ein solches Signal auszugeben, daß das genannte erste Drosselventil (9) langsam in Richtung zu einer geschlossenen Stellung zurückkehrt, wenn der Betrieb der genannten Geschwindigkeits-Steuerungsvorrichtung (11) verhindert ist, die genannte Mitnahmereibungs-Steuerungsvorrichtung (23) in Betrieb ist und die genannte Fahrzeuggeschwindigkeit von der genannten vorbestimmten Einstellung um einen Wert abweicht, der größer als ein vorbestimmter Schwellenwert ist.

5. Ein System, wie in Anspruch 4 beansprucht, in dem die genannte Korrektureinrichtung (55) für die Geschwindigkeitssteuerung der genannten Geschwindigkeits-Steuerungsvorrichtung (11) befehlen kann, ein solches Signal auszugeben, um das genannte erste Drosselventil (9) auf einmal in Richtung einer geschlossenen Position zurückzuführen, wenn die genannte Fahrzeuggeschwindigkeit von der genannten vorbestimmten Einstellung um einen Wert abweicht, der größer als ein vorbestimmter Schwellenwert ist, der einen Bremsvorgang anzeigt.

6. Ein System, wie in Anspruch 4 und 5 beansprucht, in dem die genannten vorbestimmten Schwellenwerte im wesentlichen identisch sind.

7. Ein System, wie in irgendeinem der Ansprüche 2 bis 6 beansprucht, in dem das genannte erste Drosselventil (9) ein mechanisches Ventil umfaßt.

## Revendications

1. Système pour commander l'état d'avance d'un véhicule à moteur, ledit système comprenant un moyen de commande de traction (23) pour commander la force d'entraînement du véhicule, un moyen de commande de vitesse (11) pour réguler la vitesse du véhicule selon un réglage de vitesse prédéterminé, et un moyen (55) sensible à un signal de sortie prédéterminé en provenance dudit moyen de commande de traction (23) pour empêcher le fonctionnement du moyen de commande de vitesse (11), caractérisé en ce que lorsque le moyen de commande de traction (23) et le moyen de commande de vitesse (11) sont tous deux en fonctionnement, le moyen de commande de vitesse est autorisé à délivrer en sortie un signal qui aurait tendance à diminuer la force d'entraînement du véhicule et est seulement empêché de délivrer en sortie un signal qui aurait tendance à augmenter la force d'entraînement du véhicule.

2. Système selon la revendication 1, conprenant :
un premier papillon des gaz (9) ; et
un second papillon des gaz (21) disposé en série avec ledit premier papillon des gaz ; et dans lequel
ledit moyen de commande de traction (23) est agencé pour commander la force d'entraînement du véhicule en commandant le fonctionnement dudit second papillon des gaz (21) ;
ledit moyen de commande de vitesse (11) est agencé pour réguler la vitesse du véhicule pour correspondre à un réglage de vitesse prédéterminé en commandant le fonctionnement dudit premier papillon des gaz (9) ; et
ledit moyen de commande de vitesse (11) comprend un moyen de correction de commande de vitesse (55) constituant ledit moyen d'empêchement et comprenant un moyen pour déterminer si ledit moyen de commande de traction (23) est en fonctionnement et pour produire un signal indicateur de commande de traction tant que ledit moyen de commande de traction (23) est en fonctionnement, et un moyen pour empêcher ledit moyen de commande de vitesse (11) de délivrer en sortie un signal de fonctionnement tel qu'ouvrir ledit premier papillon des gaz (9) tant que ledit signal indicateur de commande de traction est présent.

3. Système selon la revendication 2 pour un véhicule à moteur ayant une transmission automatique et dans lequel ledit moyen de correction de commande de vitesse (55) est conçu pour empêcher ledit moyen de commande de vitesse (11) de délivrer en sortie un signal de rétrogradation vers la transmission automatique du véhicule tant que ledit signal indicateur de commande de traction est présent.

4. Système selon la revendication 2 ou 3, dans lequel ledit moyen de correction de commande de vitesse (55) est conçu pour commander audit moyen de commande de vitesse (11) de délivrer en sortie un signal de nature à faire lentement revenir ledit premier papillon des gaz (9) vers une position fermée lorsque le fonctionnement dudit appareil de commande de vitesse (11) est empêché, ledit appareil de commande de traction (23) est en fonctionnement et ladite vitesse de véhicule s'écarte dudit réglage prédéterminé d'une quantité supérieure à une valeur de seuil prédéterminée.

5. Système selon la revendication 4, dans lequel ledit moyen de correction de commande de vitesse (55) est conçu pour commander audit appareil de commande de vitesse (11) de délivrer en sortie un signal de nature à faire immédiatement revenir ledit premier papillon des gaz (9) vers une position fermée lorsque ladite vitesse du véhicule s'écarte dudit réglage prédéterminé d'une quantité supérieure à une valeur de seuil prédéterminée, indicatrice d'une opération de freinage.

6. Système selon les revendications 4 et 5, dans lequel lesdites valeurs de seuil prédéterminées sont sensiblement identiques.

7. Système selon lune quelconque des revendications 2 à 6, dans lequel ledit premier papillon des gaz (9) comprend un papillon mécanique.
